Europäisches Patentamt

European Patent Office

Office européen des brevets

(11) Publication number: **0 269 036 B1**

## EUROPEAN PATENT SPECIFICATION

(45) Date of publication of patent specification: **15.01.92**  (51) Int. Cl.⁵: **B60C 9/00**, B60C 9/20

(21) Application number: **87117185.6**

(22) Date of filing: **21.11.87**

(54) Pneumatic radial-ply tire for heavy load.

(30) Priority: **25.11.86 JP 278805/86**

(43) Date of publication of application:
**01.06.88 Bulletin 88/22**

(45) Publication of the grant of the patent:
**15.01.92 Bulletin 92/03**

(84) Designated Contracting States:
**DE FR GB**

(56) References cited:
EP-A- 0 110 597
DE-A- 3 407 874
DE-A- 3 442 799
US-A- 4 609 024

KAUTSCHUK UND GUMMI KUNSTSTOFFE,
vol. 26, no. 7, July 1973, pages 311-317, Hei-
delberg, DE; G.PEENE: "Das Verhalten von
Stahlcord unter verschiedenen Bean-
spruchungen"

(73) Proprietor: **THE YOKOHAMA RUBBER CO.,
LTD.**
**36-11, Shinbashi 5-chome Minato-ku**
**Tokyo, 105(JP)**

(72) Inventor: **Igarashi, Eiji**
**28-1, Minamihara 1-chome**
**Hiratsuka-shi Kanagawa-ken(JP)**
Inventor: **Imamiya, Susumu**
**303, 1-4, Sumiredaira 15**
**Hiratsuka-shi Kanagawa-ken(JP)**
Inventor: **Suzuki, Yasuo**
**19-7, Nakahara 3-chome**
**Hiratsuka-shi Kanagawa-ken(JP)**

(74) Representative: **Weber, Dieter, Dr. et al**
**Dr. Dieter Weber und Dipl.-Phys. Klaus Seif-
fert Patentanwälte Gustav-Freytag-Strasse
25 Postfach 6145
W-6200 Wiesbaden 1(DE)**

**Description**

Conventional pneumatic radial-ply tires generally comprise a pair of bead wires, a carcass-ply layer composed of steel cords disposed at an angle of about 90° with the circumferential direction of the tire and the like, and a belt layer composed of steel cords disposed in the tread portion of the carcass-ply layer in a combination of two dispositions, i.e., one at a relatively small angle with the circumferential direction of the tire and another on the side of the carcass-ply layer at a relatively large angle, i.e., exceeding 45°.

Steel cords to be disposed as the outermost layer of the belt portion of the tires having such a construction should have the following properties:

1) high toughness sufficient to withstand a strong impact without causing breaking during travelling, i.e., a function of reinforcement which serves as the so-called "hoop" by bearing the load which the tire undergoes in common with the ply provided inside the belt portion, and

2) function of preventing the corrosion of the inner ply of the belt portion and the carcass layer due to the penetration of water from a cut etc. caused during travelling (i.e., a function as a protective layer).

However, with the conventional pneumatic tires, particularly heavy-load pneumatic tires, it was very difficult to simultaneously satisfy all the above-mentioned requirements from the technical point of view.

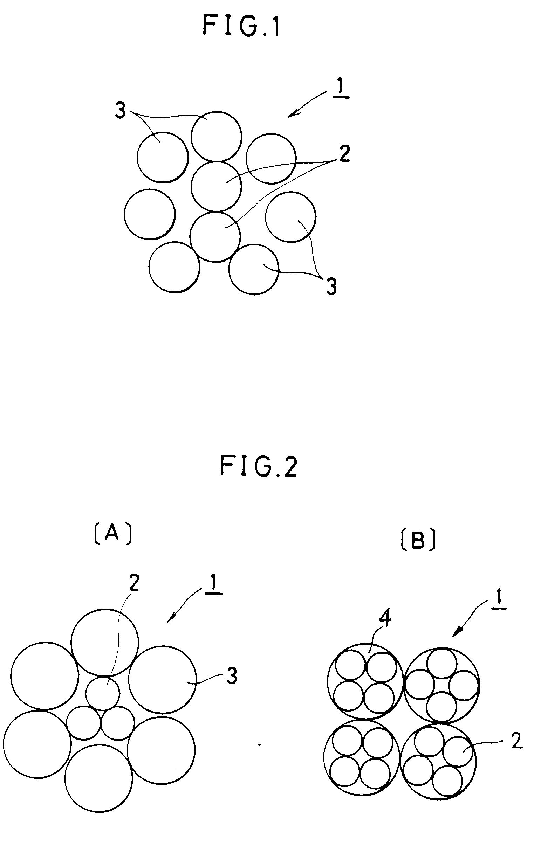

For example, FIG. 2A is a cross-sectional view of a steel cord used in the outermost layer of the belt portion of a conventional heavy-load pneumatic tire. The steel cord 1 comprises three element wires 2 having a small diameter and six element wires 3 having a large diameter twisted therewith. In this case, the diameters of the element wire 2 and the element wire 3 are 0.20 mm and 0.38 mm, respectively. Therefore, this steel cord has the following cord structure:

$$3 \times 0.20 + 6 \times 0.38.$$

When this steel cord is used in the outermost layer of the belt portion, the steel cord exhibits a satisfactory performance with respect to tenacity. However, the steel cord is poor in elongation due to its twist structure, which causes the wire to be easily broken when the cord undergoes impact force (load). That is, the cord is unsatisfactory with respect to the impact strength. Further, the element wires 3 are twisted while leaving substantially no space between them and at the same time the inner element wires 2 are tightly twisted, which prevents the uniform penetration of rubber coated into the space between the cords. This makes it impossible to sufficiently prevent the corrosion caused by the penetration of water, which renders the cord poor in resistance to corrosion.

On the other hand, a steel cord 1 used in the outermost layer of the belt portion of conventional heavy-load pneumatic tire as shown in FIG. 2B comprises four intermediate cords 4 which are twisted together and are each composed of four element wires 2 which are also twisted together. The steel cord exhibits a high elongation by virtue of its structure.

In this steel cord, the element wires 2 each have a diameter of 0.22 mm. Therefore, the steel cord has the following cord structures:

$$4 \times 4 \times 0.22$$

A tire manufactured by making use of this steel cord having a high elongation as the outermost layer of the belt portion is satisfactory with respect to the impact resistance because the strain is removed by virtue of the twist structure of the steel cord. However, this steel cord is unsatisfactory with respect to the function for protection against the penetration of water and, therefore, does not meet the requirement for corrosion resistance like the steel cord shown in FIG. 2A. Further, since the twist structure of this steel cord permits the strain to escape, the share of the strength is very small. Therefore, this steel cord lacks in the function for reinforcement as the belt layer of the tire. An increase in the strength through the reinforcement of the inner plies of the belt portion for the purpose of making up for the small share of strength is unfavorable from the standpoint of practical performance of the tire because this expedient brings about an increase in the weight of the tire.

Japanese Patent Laid-Open No. 21641/1987 proposes a tire which uses a steel cord having a special twist structure, i.e., the so-called open structure such that the cord has a twist structure of $1 \times 4$ or $1 \times 5$ wherein a twisted portion in which the filaments constituting the cord are twisted without coming into tight contact with each other and a twisted portion in which the filaments constituting the cord are twisted in such a manner that the filaments adjacent to each other are brought into tight contact with each other at least one portion are alternately present along the longitudinal direction of the cord. However, in this cord, the presence of the twisted portions which are different from each other in the state of the contact between the filaments along the longitudinal direction of the cord tends to cause uneven penetration of rubber into the inside of the cord. Further, the application of tension to the cord brings about tight contact of the filaments in the portion in which the filaments are twisted without coming into tight contact with each other, which leads to poor penetration of rubber into this portion. Therefore, it is necessary to control the tension of the cord when the cord is subjected to processing such as rubber coating, which makes the processing complicate.

Moreover, the use of a cord having a twist structure of 1 × 4 or 1 × 5 for a heavy-load pneumatic tire requires an increase in the diameter of the element wires of the steel filament. The increase in the diameter of the element wires similarly leads to a lowering in the processing characteristics. Further, such an excessively dense twist structure tends to cause edge separation.

An object of the present invention is to provide a heavy-load pneumatic tire, having an excellent practical performance which meets the above-mentioned requirements for the outermost layer of the belt portion of a pneumatic tire, particularly meets both the requirements of the function for protection, such as the above-mentioned corrosion resistance, and the function for reinforcement and, at the same time, improved in these functions.

Another object of the present invention is to provide an improved structure of a steel cord constituting the outermost layer of the belt portion of a tire.

The above-mentioned objects of the present invention can be accomplished by providing, as the outermost layer of the belt portion of the heavy load pneumatic tire, a belt layer comprising a steel cord having a cord structure of 2 + 7 and the following tenacity per cord: $(1700 \sim 2050) \, d^{1.872}$ Kp/cord wherein d is the diameter of an element wire constituting the steel cord and is in the range of 0.28 to 0.40 mm and impregnated with rubber.

FIG. 1 is a cross-sectional view of an example of a steel cord used in the present invention;

FIGS. 2A and B are cross-sectional views of steel cords of conventional tires; and

FIG. 3 is a cross-sectional view of an example of the heavy-load pneumatic tire of the present invention.

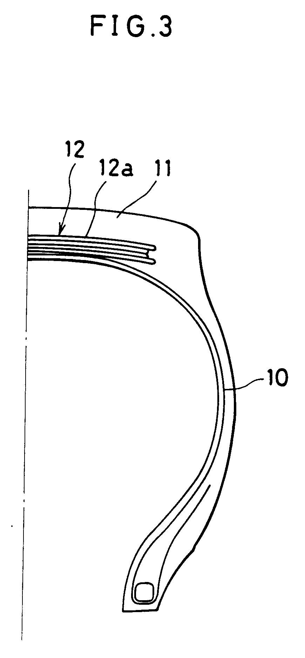

In FIG.3, numeral 10 designates a carcass-ply layer comprising steel cords or organic fiber cords. A belt layer 12 having a multi-layer structure (four layers in this example) is provided in a tread portion 11 at the outer periphery of the carcass layer. The belt layer comprising the steel cords according to the present invention is preferably applied to the outermost layer 12a among the plurality of layers of the belt layer.

An important characteristic feature of the present invention resides in the adoption of a cord structure of 2 + 7 as the cord structure of the belt used in the above-mentioned belt layer. Specifically, as shown in FIG. 1, the cord has a structure such that, as viewed against the cross section, two element wires 2 provided in the inside thereof and seven element wires 3 provided so as to surround the outside of the element wires 2 are twisted into an integral form.

It is preferred that the diameter of the element wire 2 is the same as that of the element wire 3. The twist pitch varies depending upon the diameter of the element wire. However, for example, in the case of a wire having a diameter of 0.30 mm, a preferable twist pitch is 5 to 10 mm with respect to the inner side and 10 to 20 mm with respect to the outer side.

In the cord having a structure of 2 + 7, as shown in FIG. 1, there exist suitable gaps between the outer element wires 3,3 adjavent to each other. This permits the coating rubber to penetrate through these gaps, causing it to surround the inner element wire 2. For this reason, when the cord is impregnated with coating rubber, even the gaps present in the inside of the cord are filled with the coating rubber. Therefore, not only the outer element wire 3 but also the inner element wire 2 is coated with the coating rubber. Therefore, even when the tread portion is cut to such an extent that water penetrates from the cut portion into the inside thereof, the outermost layer of the belt portion is not corroded. This realizes the very effective protection of the inner layers of the belt portion and the carcass ply.

In the present invention, it is necessary that the steel cord having the above-mentioned cord structure have the following tenacity per cord depending upon the diameter, d, of the element wire:

$(1700 \sim 2050) \, d^{1.872}$ Kp/cord

wherein d is the diameter of the element wire expressed in terms of mm and is in the range of 0.28 to 0.40 mm.

When the tenacity of the steel cord is less than $(1700) \, d^{1.872}$ Kp/cord, the steel cord cannot impart a function as a reinforcing layer, i.e., a strength sufficient to withstand a sudden impact, to the outermost belt layer. On the other hand, when the tenacity exceeds $(2050) \, d^{1.872}$ Kp/cord, the processability of the wire is lowered, which tends to cause internal defects, thus leading to an adverse effect on the fatigue resistance.

Further, in the present invention, it is necessary that the element wire used for production of a steel cord having the above-mentioned tenacity have a diameter, d, ranging from 0,28 to 0.40 mm. When the diameter, d, of the element wire is smaller than 0.28 mm, the tenacity obtained is not sufficient to serve as the belt layer. On the other hand, when the diameter, d, exceeds 0.40 mm, the cord manufactured therefrom has remarkably lowered fatigue resistance and, therefore, does not meet the requirement with respect to the practical performance.

It is preferred that the element wire constituting the steel cord according to the present invention have a carbon content higher than that of the element wire used in the conventional steel cord, i.e., have a carbon content of at least 0.77% by weight. The use of such an element wire having a high carbon content further improves the toughness of the tire cord. However, when the carbon content is too high, the cord becomes fragile. Therefore, it is preferred that the upper limit of the carbon content be 0.90% by weight.

It is preferred that the rubber for coating the steel cord having the above-mentioned cord structure have a 50% modulus of 10 to 40 $Kp/cm^2$. When the 50% modulus is less than 10 $Kp/cm^2$, the extent of the strain occurring at the edge portion of the steel cord is increased, which causes the lowering in the so-called "anti-belt edge separation property". On the other hand, when the 50% modulus exceeds 40 $Kp/cm^2$, the durability of the steel cord is lowered and, therefore, tends to cause the breaking of the cord. In this case, the processability of the cord is also remarkably lowered.

The surface of the steel element wire used in the present invention may be plated with copper, brass, tin, zinc, etc. or an alloy containing the above-mentioned metals and, further, nickel, cobalt, etc. for the purpose of improving the adhesion of the cord to the rubber.

In the present invention, the belt layer comprising the above-mentioned steel cord is used as the outermost layer of the belt layer of a tire. When the belt layer has a multi-layer structure comprising at least two layers, the belt layer according to the present invention may be used in the two or more layers or may be used in combination with other kinds of belt layers.

The materials of other tire components, such as carcass layer, are not particularly limited and may be used as the materials for the carcass layer and various tire constituent materials known in prior arts.

The above-mentioned wire having a structure of 2 + 7 has an elliptic cross section. Although the ratio of the length of the major axis to that of the minor axis varies depending upon the twist pitch, the ratio is generally 1.1 to 1.4. When a belt layer of a tire is formed of the above-mentioned wire, the thickness of the coating rubber used is preferably 1.67 times the length of the minor axis and 1.89 times the length of the major axis. When the thickness of the coating rubber is less than 1.69 times the length of the minor axis, the durability of the cord is lowered. On the other hand, when the thickness exceeds 1.89 times the length of the major axis, the driving stability is unfavorably lowered.

The tire having a belt layer comprising the steel cord according to the present invention provided as the outermost belt layer can be applied to the tires of various sizes such as tires for heavy-load vehicles, such as general trucks and buses, and tires for light-load trucks.

The present invention will now be described in more detail with reference to the following examples.

In the examples, the tenacity of the cord, fatigue resistance, anti-belt edge separation property, plunger destruction test, and evaluation of corrosion properties and breaking of the wire (impact resistance) were determined according to the following methods:

Tenacity of cord: determined according to JIS-G-3510.

Fatigue resistance: determined with a Rotating Beam Fatigue Tester manufactured by Takachiho Seiki Co. Ltd. under the following conditions: a length of sample of 120 mm; and a radius of bending (R) 25 mm of.

Anti-belt edge separation property: the tire was travelled until the failure due to the occurrence of the edge separation was observed under the following separation sprag conditions: a load of 120%; and a speed of travel of 45 km/hr.

Plunger destruction test: determined according to the method as described in JIS-D-4230.

Evaluation of corrosion property and breaking of wire: holes were provided by drilling at intervals of 20 cm on the circumference of the tread of a tire from the surface of the tread so as to reach the outermost layer of the belt portion. The tire was travelled on a rough road in a distance of 100,000 km and then examined with respect to the occurrence of corrosion and breaking of wire.

Example 1, Comparative Examples 1 to 3 and Conventional Examples 1 to 3:

Test tires each having a structure of 1000R20 14PR were manufactured by making use of six kinds of steel cords as shown in Table 1.

The carcass layer and belt layer of the test tires were manufactured according to the specifications as shown in Table 2.

These test tires were applied to the plunger destruction test and the evaluation of corrosion property and breaking of wire. The results are shown in Table 3.

As can be seen from Table 3, test tire No. T-3 manufactured by making use of cord No. 3 of Conventional Example 1 was satisfactory with respect to the tenacity of the belt but was not only poor in a corrosion effect but also lacking in the resistance to breaking of wire due to poor toughness.

Test tire No. T-4 manufactured by making use of tire cord No. 4 of Conventional Example 2 not only was insufficient in the strength of the outermost layer of the belt portion but also caused the breaking of the wire due to the low tenacity of the belt. On the other hand, test tire No. T-5 (Conventional Example 3) was free from the occurrence of the breaking of the wire because of the high tenacity of the wire but was insufficient in the corrosion effect.

By contrast, test tire No. T-2 manufactured by making use of steel cord No. 2 of Example 1 was not only satisfactory with respect to the tenacity of the belt but also free from the occurrence of the breaking of the wire and the occurrence of corrosion, i.e., had excellent strength characteristics and protective characteristics.

Test tires Nos. T-1 (Comp. Ex. 1), T-6 (Comp. Ex. 2) and T-7 (Comp. Ex. 3) manufactured by making use of steel cords No. 1, No. 5 and No. 6 respectively, were satisfactory with respect to the corrosion property but caused the occurrence of the breaking of the wire due to insufficient toughness of the steel cord.

Table 1

| Cord No. | 1 | 2 | 3 | 4 | 5 | 6 |
|---|---|---|---|---|---|---|
| Cord structure | 2 + 7 x 0.30 | 2 + 7 x 0.30 | 3 x 0.20 + 6 x 0.38 | 4 x 4 x 0.22 | 2 + 7 x 0.25 | 2 + 7 x 0.42 |
| Carbon content of element wire (% by weight) | 0.72C | 0.82C | 0.72C | 0.72C | 0.82C | 0.82C |
| Tenacity of cord (kp/cord) | 165 | 193 | 190 | 130 | 137 | 352 |
| 50% modulus of coating rubber | 30 | 30 | 30 | 30 | 30 | 30 |

Table 2

| Site | Cord used | End count |
|---|---|---|
| Carcass | 3 + 9 + 15 x 0.175 + 1 x 0.15 | 28 |
| 1st Belt layer | 3 x 0.20 + 6 x 0.38 | 18 |
| 2nd Belt layer | 3 x 0.20 + 6 x 0.38 | 27 |
| 3rd Belt layer | 3 x 0.20 + 6 x 0.38 | 27 |
| Notes: In the above Table, the end count is the number of the cords per 50 mm width. | | |

Table 3

|  | Ex. 1 | Comp. Ex. 1 | Conventional Ex. | | | Comp. | Ex. |
|---|---|---|---|---|---|---|---|
|  |  |  | 1 | 2 | 3 | 2 | 3 |
| Tire No. | T - 2 | T - 1 | T - 3 | T - 4 | T - 5 | T - 6 | T - 7 |
| Cord No. | 2 | 1 | 3 | 4 | 4 | 5 | 6 |
| Plunger index | 101 | 96 | 100 | 93 | 110 | 94 | 115 |
| Growth of corrosion | o | o | x | x | x | o | o |
| Breaking of wire | o | x | x | x | o | x | x |
| Number of cords per 50 mm width | 21 | 21 | 21 | 21 | 21 | 21 | 21 |

Notes: In the above Table, T-5 is a test tire in which a steel wire having a structure of 3 + 9 + 15 x 0.23 + 1 x 0.15 was incorporated as a reinforcing cord of the second and third belt layers at an end count of 23.

## Claims

1. A heavy-load pneumatic radial-ply tire comprising a belt layer provided as an outermost layer of a belt portion of a tire which comprises a steel cord having a cord structure of 2 + 7 and the following tenacity per cord:

$(1700 \sim 2050) \, d^{1.872}$ kp/cord

wherein d is the diameter of an element wire constituting said steel cord and is in the range of 0.28 to 0.40 mm and impregnated with rubber.

2. A heavy-load pneumatic radial-ply tire according to claim 1, wherein said element wire has a carbon content of 0.77% to 0.9%.

3. A heavy-load pneumatic radial-ply tire according to any of claims 1 and 2, wherein said steel cord is coated with rubber having a 50% modulus of 10 to 40 kp/cm$^2$.

4. A heavy-load pneumatic radial-ply tire according to any of claims 1 to 3; wherein said steel cord comprises a steel element wire plated with at least one member selected from among a nickel-containing alloy, a cobalt-containing alloy, copper, tin and zinc.

## Revendications

1. Bandage pneumatique radial à nappes pour charge élevée comprenant une couche de ceinturage prévue en tant que couche la plus externe d'une portion de ceinturage d'un bandage caractérisé en ce qu'il comprend un câble d'acier ayant une structure de câble de 2 + 7 et la tenacité suivante par câble :

$(1700 \sim 2050) \, d^{1.872}$ kp/câble

dans lequel d est le diamètre d'un élément de câble constituant le câble d'acier et est dans une gamme entre 0,28 à 0,40 mm et est imprégné de caoutchouc.

2. Bandage pneumatique radial à nappes pour charge élevée selon la revendication 1, dans lequel l'élément de câble présente un pourcentage de carbone entre 0,77 % et 0,9 %.

3. Bandage pneumatique radial à nappes pour charge élevée selon l'une des revendications 1 et 2, dans

EP 0 269 036 B1

lequel le câble d'acier est revêtu d'un catouchouc ayant un module à 50 % de 10 à 40 kp/cm².

4. Bandage pneumatique radial à nappes pour charge élevée selon l'une des revendications 1 à 3, dans lequel le câble d'acier comprend un élément de câble en acier plaqué avec au moins l'un des éléments choisis parmi un alliage contenant du nickel, un alliage contenant du cobalt, du cuivre, de l'étain et du zinc.

**Patentansprüche**

1. Schwerlastdruckluftreifen mit Radiallagen mit einer Gürtelschicht, die als am weitesten außen liegende Schicht eines Gürtelbereiches eines Reifens vorgesehen ist, der Stahlcorde aufweist, die einen Cordaufbau von 2 + 7 und die folgende Zugfestigkeit pro Cord haben:

$$(1700 \sim 2050)\ d^{1,872}\ kp/cord$$

wobei d der Durchmesser eines Drahtelementes ist, welche den Stahlcord bilden und im Bereich von 0,28 bis 0,4 mm liegt und mit Gummi imprägniert ist.

2. Schwerlastdruckluftreifen mit Radiallagen nach Anspruch 1, wobei das Drahtelement einen Kohlenstoffgehalt von 0,77 bis 0,9 % hat.

3. Schwerlastdruckluftreifen mit Radiallagen nach einem der Ansprüche 1 oder 2, wobei der Stahlcord mit Gummi beschichtet ist, welches einen 50 % Modul zwischen 10 und 40 kp/cm² hat.

4. Schwerlastdruckluftreifen mit Radiallagen nach einem der Ansprüche 1 bis 3, wobei der Stahlcord ein Stahldrahtelement aufweist, welches mit zumindest einem Mitglied aus der folgenden Gruppe plattiert ist: einer Nickel enthaltenden Legierung, einer Kobalt enthaltenden Legierung, Kupfer, Zinn und Zink.

7

# FIG.1

# FIG.2

[A]

[B]

FIG.3